# EUROPEAN PATENT APPLICATION

(11) **EP 2 868 905 A2**
(43) Date of publication of application: **06.05.2015**
(21) Application number: 14175371.5
(22) Date of filing: 02.07.2014
(51) Int. Cl.: F02D 41/30, F02M 69/04, F02D 15/00, F02D 19/08, F02D 41/00

(54) **Method and apparatus for controlling combustion of engine having mixed combustion mode with diesel and gasoline**

(30) Priority: 29.10.2013 KR 20130129088
(71) Applicant: Hyundai Motor Company, Seoul 137-938 (KR)
(72) Inventor: Choi, Dae, Osan-si, Gyeonggi-do 447-280 (KR); Lee, Hyeung Woo, Suwon-si, Gyeonggi-do 442-703 (KR); Jung, Hyun Sung, Anyang-si, Gyeonggi-do 430-702 (KR); Chi, Yo Han, Seongnam-si, Gyeonggi-do 463-773 (KR); Park, Seung Il, Suwon-si, Gyeonggi-do 442-783 (KR)
(74) Representative: Viering, Jentschura & Partner Patent- und Rechtsanwälte

(57) **Abstract**

A method and an apparatus for improving unstable ignition and knocking which may be generated in an engine to which a diesel-gasoline mixed combustion mode and a gasoline mixed combustion mode may be applied to low load and high load driving zones may include determining a combustion mode according to a current driving state of the engine from the mixture combustion mode and the gasoline combustion mode, and variable-controlling the compression ratio to a compression ratio corresponding to a corresponding combustion mode by controlling a variable compression ratio device for the control of the compression ratio to the compression ratio corresponding to the combustion mode according to the current driving state of the engine.

## Description

### BACKGROUND

### Field of the Invention

The present invention relates to a method of and an apparatus for controlling combustion of an engine, and more particularly to a method of and an apparatus for controlling combustion of an engine to improve unstable ignition and knocking which may be generated in an engine to which a diesel-gasoline mixed combustion mode and a gasoline mixed combustion mode are applied to low load and high load driving zones.

### Description of Related Art

Today, two types of vehicle engines are widely used; one is a gasoline engine of a spark ignition (SI) type and another is a diesel engine of a compression ignition (CI) type.

The SI type engine may be classified into an indirect injection type to inject fuel into a throttle body or an intake manifold and to intake the fuel with air at the intake stroke and a gasoline direct injection (GDI) type to inject fuel directly into a combustion chamber to burn for the improvement of engine performance and fuel ratio and the reduction of exhaust gas.

A port fuel injection (PFI) type engine, as an example of the indirection injection type engine, employs a premixed combustion in which a combustible mixture including the fuel injected into the intake port of the intake manifold and air is introduced into the combustion chamber and is ignited and burnt by an ignition plug in a uniform mixture.

The GDI engine injects the gasoline fuel directly into the combustion chamber similar to in the CI diesel engine and thus lean burn is enabled and advantageous in view of engine performance, fuel ratio, and exhaust gas in comparison to the indirect injection type engine.

In general, the SI gasoline engine has a limit to increase a compression ratio (CR) because the higher risk knocking may occur the higher the CR is, and has poor thermal efficiency and fuel ratio than those of the CI engine.

In order to satisfy restrictions against CO₂ being gradually more strict and customers' demands, it needs to increase the CR of an engine but it needs also a technology of preventing knocking from being generated at the increased CR.

In a high CR gasoline engine, knocking is restrained and pumping loss is reduced when an exhaust gas recirculation (EGR) device is applied to restrain the knocking, but the existing ignition plug cannot obtain good ignition or makes NOX increase.

Meanwhile, combustion property of the diesel engine is to employ the compression ignition using self-ignition property of diesel fuel and uses high compression ratio to make air in the combustion chamber high pressure and high temperature state, so that the diesel engine has superior thermal efficiency and fuel ratio than the gasoline engine.

In recent years, as unexceptional climate changes such as global warming are reported all around the world, environmental regulations affect in many countries, especially advanced countries, more particularly in automobile industrial.

In order to meet the environmental regulation, many researches and developments for the compression ignition engine are being conducted due to the advantages such as a small quantity of unburned hydrocarbon (UHC) and CO₂. However, the CI engine discharges a great deal of NOx and particulate matters (PM) caused by a not-uniform air-fuel mixture and needs an expensive after-treatment device such as a diesel particulate filter (DPF) and a DeNox for reduction of Nox and PM to meet the regulations.

To overcome the above-mentioned disadvantages, research has been focused on the development of a homogeneous charge compression ignition (HCCI) of making the mixture in the combustion chamber homogeneous to remove an area where a fuel is concentrated known as a PM generating area and of reduce drastic heat are carried out.

The HCCI is advantageous to improve fuel ratio through the compression ignition and lean burn in comparison to the gasoline engine and to reduce PM/NOx through the premixed combustion in comparison to the diesel engine.

However, the HCCI is disadvantageous in difficult control of ignition and burning and excessive pressure increase, burning noise, a low output and is known to have a problem of solving a narrow driving region (is limited to use only in a low speed and a low load driving region of an engine).

Thus, research for a mixed combustion of burning diesel and gasoline at the same time to avoid the problem of the existing HCCI is being carried out.

There is a method of burning a homogeneous fuel, as an example of the diesel-gasoline mixture combustion, in order to suppress knocking caused by the premixing and to control the ignition timing near the TDC by elongating the ignition delay period, by mixing gasoline with a high octane number in advance to make a homogeneous mixture within the combustion chamber during the intake stroke and by directly injecting diesel with a high cetane number for the compression ignition into the combustion chamber for the compression ignition during the compression stroke.

The diesel-gasoline mixture combustion enables to secure ignition of gasoline even under the high EGR condition in comparison to the existing HCCI and not point combustion but volumetric combustion to improve combustion efficiency and fuel ratio than those of the existing gasoline engine because self-ignited diesel acts as an ignition source for combustion of gasoline.

Moreover, the engine employing the diesel-gasoline mixture combustion reduces products of exhaust gas in comparison to the existing diesel engine and the expensive after-treatment device making price increase may be omitted.

However, since, in the diesel-gasoline mixture combustion engine, the mixture combustion is possible only under the condition where the diesel compression ignition may occur, the diesel-gasoline mixture combustion engine must be driven at a compression ration lower than that of a diesel engine but higher than that of a gasoline engine and a compression ratio of a cylinder thereof is equal to or higher a boundary condition where the diesel compression ignition is secured.

Thus, the diesel-gasoline mixture combustion engine is disadvantageous than the existing diesel engine in view of securing the compression ignition due to the low compression ratio and the high EFG condition in the low load driving region, while possibility of knocking becomes higher than the existing gasoline engine because of the high compression ratio in the high load driving region.

Hence, in order to improve the above-mentioned problems over all driving regions, it needs to apply the diesel-gasoline mixture combustion at a compression ratio higher than that of the existing gasoline engine and lower than that of the existing diesel engine over the low/middle load engine driving regions.

Moreover, it needs a complex combustion mode system capable of utilizing the gasoline combustion to in which a compression ratio employed in a general gasoline engine is applied at the low load and the high load, and to this end concept of a variable compression ratio must be introduced.

In this case, it needs to secure the compression ignition in the region where the diesel-gasoline mixture combustion is applied and even in a region where the gasoline combustion occurs, and to prevent knocking from being generated by the gasoline combustion in the high load region.

To this end, it needs to distinguish combustion modes and to control the same, and a technology of solving the problem caused by the existing fixed compression ratio is needed.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY

Various aspects of the present invention are directed to providing a method of and an apparatus for improving unstable ignition and knocking in an engine to which a diesel-gasoline mixture combustion is applied.

In accordance with an aspect of the present invention, there is provided a method of controlling combustion of an engine having a mixture combustion mode where a mixture combustion of diesel and gasoline is carried out and a gasoline combustion mode where only gasoline is burnt, the method including determining a combustion mode according to a current driving state of the engine from the mixture combustion mode and the gasoline combustion mode, and variable-controlling the compression ratio to a compression ratio corresponding to a corresponding combustion mode by controlling a variable compression ratio device for the control of the compression ratio to the compression ratio corresponding to the combustion mode according to the current driving state of the engine..

In accordance with another aspect of the present invention, there is provided an apparatus for controlling combustion of an engine having a mixture combustion mode where diesel and gasoline are mixed and burnt and a gasoline combustion mode where the gasoline only is burnt, the apparatus including a controller determining a combustion mode from the mixture combustion mode and the gasoline combustion mode according to a current driving state of the engine and outputting a control signal for the control of a compression ratio corresponding to a combustion mode according to the current driving state of the engine, and a variable compression ratio device changing the compression ratio to a value corresponding to a corresponding combustion mode in response to the control signal from the controller.

According to the combustion controlling method of the present invention, the combustion mode is selected according to the driving state a compression ratio corresponding to the selected combustion mode is changed so that knocking and abnormal ignition that may be generated in an engine having a diesel-gasoline mixture combustion mode and a gasoline combustion mode can be solved.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a view illustrating an engine having a diesel-gasoline mixture combustion mode and a combustion cycle in the diesel-gasoline mixture combustion mode.
FIG. 2 is a graph illustrating an example of a map for determining a combustion mode according to an exemplary embodiment of the present invention.
FIG. 3 is a flowchart illustrating a combustion control method according to an exemplary embodiment of the present invention.
FIG. 4 is graphs illustrating a variable state of an intake valve closing period in a continuous variable control and a 2-step control according to the exemplary embodiment of the present invention.
FIG. 5 is a flowchart illustrating a combustion control method according to another embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

Hereinafter, exemplary embodiments of the present invention will be described in detail with reference to the accompanying drawings.

The present invention is made to improve problems of the existing diesel-gasoline mixture combustion engine, especially, the unstable ignition in the low load driving region and the knocking in the high load driving region, has a mixture combustion mode where diesel and gasoline are mixed and burnt and a gasoline combustion mode where gasoline only is burnt as combustion modes, and to control a compression ratio variously according to the combustion mode selected during the driving to solve the above-mentioned problems over all driving regions.

In the mixture combustion mode, gasoline is injected to generate premixture during the intake stroke and diesel for ignition control is injected into the high temperature and high pressure mixture compressed in a combustion chamber to ignite during the compression stroke to carry out the combustion of the diesel-gasoline mixture.

This mixture combustion mode enables to avoid the problems of the existing HCCI combustion, especially is a combustion mode of homogeneous mixture, lean burn, self-ignition ignition to secure combustion control stability by using gasoline as a main fuel to be premixed while directly injecting diesel as an ignition control fuel in which the diesel compression ignition combustion (low fuel ratio) and the gasoline premixture combustion (clean exhaust gas) are mixed.

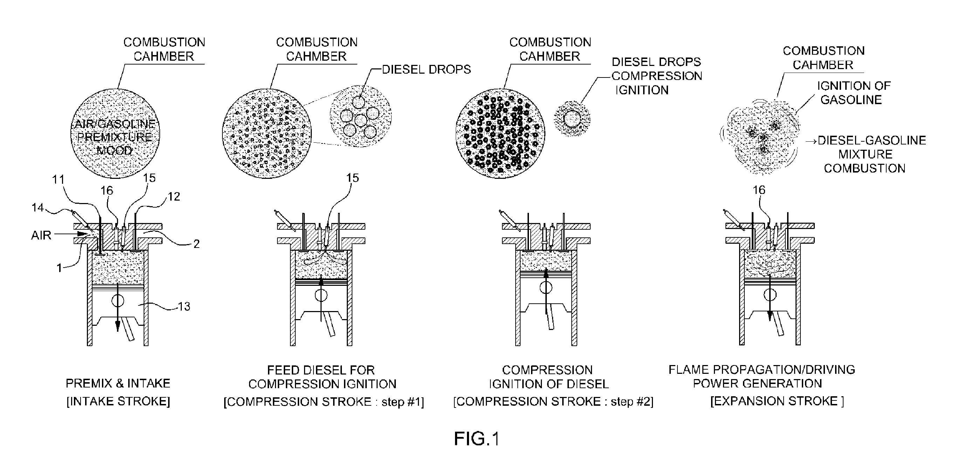

FIG. 1 is a view illustrating an engine having a diesel-gasoline mixture combustion mode and a combustion cycle in the diesel-gasoline mixture combustion mode. A mixture combustion mode will be described in detail with reference to FIG. 1 as follows.

As illustrated, during the intake stroke where an intake valve 11 is opened and a piston 13 moves down toward a bottom dead point, gasoline is injected through a first injector 14 installed in an intake port 1 of intake manifolds (gasoline PFI) while air introduced into a combustion chamber through the intake port 1 is mixed with the gasoline injected through the first injector 14 in advance.

Then, a mixture in which the premixture introduced through the intake port 1 is mixed with recirculated exhaust gas (exhaust-gas recirculation (EGR) gas) introduced into the combustion chamber by an exhaust-gas recirculation (EGR) device is generated within the combustion chamber, so that homogeneous premixture mood and a combustion condition are established within the combustion chamber.

Next, during a compression stroke (Step 1) where the piston 13 moves up toward a top dead point when the intake valve 11 and an exhaust valve 12 are closed, diesel for ignition is injected through a second injector 15 installed in the combustion chamber so that diesel liquid drops for ignition are distributed in the premixture (a stable ignition source is secured).

Moreover, compression ignition in which a plurality of diesel liquid drops within the premixture are ignited by self under high temperature and high pressure condition is carried out during the compression stroke (Step 2) and the gasoline is ignited by the plurality of self-ignited diesel as an ignition source and flame propagates during the expansion stroke.

During the expansion stroke, main heat is generated by the gasoline premixture and the piston 13 is moved by an explosive force caused by the gasoline premixture combustion to generate a driving power.

Although FIG. 1 omits an exhaust stroke, an exhaust gas is discharged through an exhaust port 2 and an exhaust manifold after the combustion during the exhaust stroke where an exhaust valve 12 is opened and the piston 13 moves up toward the top dead point.

As such, since the ignition is carried out by the diesel drops distributed within the premixture in the mixture combustion mode, it is possible to secure a stable ignition source and to improve unstable ignition and shortcoming on combustion efficiency of the existing gasoline HCCI through the gasoline ignition by the multiple point compression ignitions.

In addition, the main heat and a driving power are generated by the gasoline premixture combustion caused by the diesel compression ignition, the present invention is advantageous in view of clean exhaust gas, excellent response, silence, improved fuel ratio, enhancement of unstable combustion, and high efficiency in comparison to the existing gasoline HCCI and the diesel HCCI.

The gasoline combustion mode employed in an exemplary embodiment of the present invention device a gasoline premixture combustion mode by spark ignition in which gasoline is injected through the first injector 14 to introduce air and the premixture into the combustion chamber and which the premixture is ignited to burn by an ignition plug 16 installed in the combustion chamber without injection of diesel during the expansion stroke after the compression.

Since the gasoline combustion mode has a similar combustion cycle as that of the existing gasoline engine, its detailed description will be omitted.

As described above, the present invention employs a gasoline combustion mode by the spark ignition in addition to the diesel-gasoline mixture combustion mode by the compression ignition employed in the existing mixture combustion engine as a combustion mode of an engine and further includes an ignition device having the ignition plug 16 as a hardware for the spark ignition in the gasoline combustion mode because a gasoline fuel feeding system is already provided in the existing mixture combustion engine.

Meanwhile, in an exemplary embodiment of the present invention, any one of the mixture combustion mode and the gasoline combustion mode is selected according to a driving state of an engine and a control to perform the selected combustion mode is carried out.

Particularly, in an exemplary embodiment of the present invention, a compression ratio is controlled with a value corresponding to the selected combustion mode during the selected combustion mode to improve the problems such as knocking and abnormal ignition over whole driving regions of an engine, so that it is possible to achieve the homogeneous mixture combustion, lean burn, and compressive self-ignition combustion which are improved than the existing mixture combustion.

In order to achieve the present invention, a region to which the mixture combustion mode is applied and a region to which the gasoline combustion mode is applied are preset according to the driving state of an engine and a corresponding combustion mode is selected and determined based on a current driving state information of the engine detected during the driving of the engine at the state when the region is selected according to the driving state.

An RPM of the engine and an engine load that are determined from signals from a driving state detector, that is detected signals from respective sensors of a vehicle or a position information of an accelerator pedal instead of the engine load may be the driving state information to determine the combustion mode.

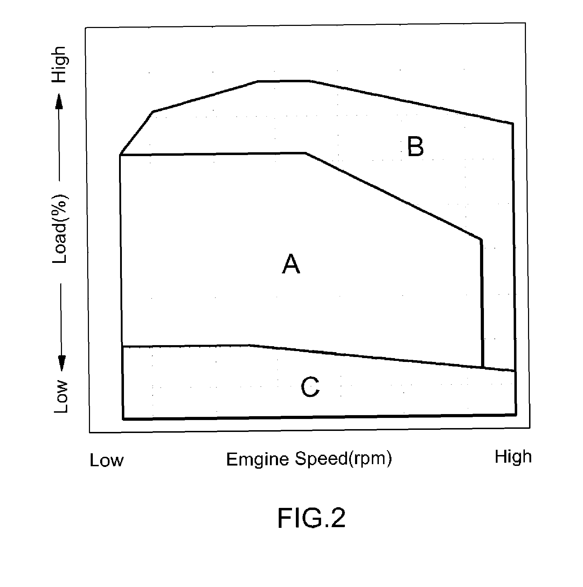

FIG. 2 is a graph illustrating an example of a map for determining a combustion mode according to an exemplary embodiment of the present invention such as an example of a preset region to which a combustion mode is applied according to the driving state of an engine, in which three regions are set according to the RPM of an engine and the engine load (%).

A symbol 'A' of FIG. 2 set to as a middle region indicates a driving region to which the gasoline premixture combustion and the compression ignition combustion are applied, a symbol 'B' set to as a high load and high speed region indicates a driving region to which the gasoline combustion mode is applied, and a symbol 'C' set to as a low load region indicates a driving region to which the spark ignition combustion mode is applied as a region where unstable combustion may occur when the mixture combustion mode is applied.

For example, the gasoline combustion mode is selected at the high load driving region and the low load driving region of an engine and the mixture combustion mode is selected at the middle driving region so that the combustion in the engine is controlled under the selected combustion mode.

Moreover, the combustion control method according to the exemplary embodiment of the present invention further includes controlling a compression ratio varying device based on a selected combustion mode to control a compression ratio variably for the optimized combustion conditions of the gasoline mixture combustion mode and the mixture combustion mode.

In this case, through the compression ration variable control, the compression ratio is reduced at the gasoline combustion mode while being high at the mixture combustion mode relatively than that at the gasoline combustion mode.

These are obtained by considering different optimal compression conditions between the gasoline combustion mode and the diesel-gasoline mixture combustion mode. In a case of the gasoline combustion mode selected in the high load driving region and the low load driving region, the combustion is preferably carried out under the same compression ratio condition (for example, a compression ratio of 9 to 11) as that a general gasoline engine, while the diesel-gasoline mixture combustion selected in the middle driving region is preferably carried out under the compression ratio condition (for example, a compression ratio of 13 to 14) higher than a boundary condition where the diesel compression ignition is enabled.

Since a desired temperature directly after the compression ignition (for example, 700K) and a compression ratio enabling the diesel compression ignition should be guaranteed in the mixture combustion mode, a minimum compression ratio capable of guaranteeing the diesel compression ignition and higher should be controlled. However, it is preferable to use a compression ratio lower than that the minimum compression ratio for the reduction of knocking in the gasoline combustion mode.

If the compression ratio of a cylinder is fixed high based on the mixture combustion, knocking may occur in the gasoline combustion mode. On the contrary, the compression ratio is fixed low based on the gasoline combustion mode, the diesel compression ignition is impossible in the mixture combustion mode. Thus, the knocking and the unstable compression ignition may be solved over whole driving regions of an engine if a compression variable control may be carried out to satisfy the preferable compression ratio conditions in both of the combustion modes.

In an exemplary embodiment of performing a variable compression ratio control, it is carried out a variable valve timing control to vary timing of intake valve closing (IVC: not shown) by using a variable valve timing device, which is installed to an engine, to change the compression ratio according to the combustion modes. The compression ratio of the fuel mixture becomes high by the early intake valve closing (EIVC) carried out by the variable valve timing device and becomes low by the late intake valve closing (LIVC).

As such, the variable valve timing device employed in the present exemplary embodiment of the present invention serves as a compression ratio varying device to change the timing of the IVC to vary an effective thermodynamic compression ratio. When a controller outputs a valve timing control signal for the variable compression ratio according to the combustion mode, the variable valve timing device is controlled to vary the IVC according to the valve timing control signal from the controller.

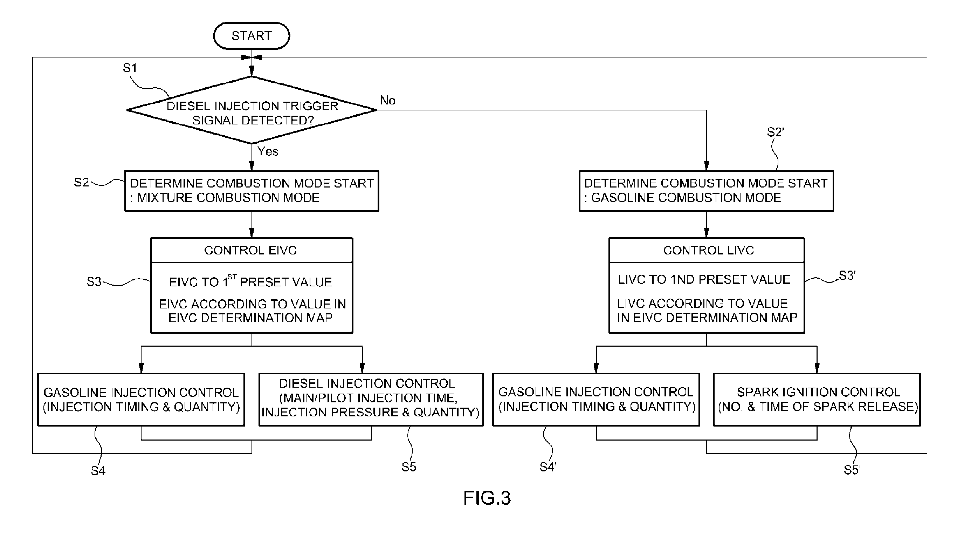

FIG. 3 is a flowchart illustrating a combustion control method according to an exemplary embodiment of the present invention. The present exemplary embodiment of the present invention will be described in more detail with reference to FIG. 3.

First, the controller may detect a diesel injection trigger signal to determine a combustion mode corresponding to a current driving state of an engine.

If the controller detects the diesel injection trigger signal (detection of a rising edge of the diesel injection trigger signal), the controller determines start of the mixture combustion mode (S1 and S2) and performs the EIVC to increase the compression ratio than the minimum compression ratio where the diesel compression ignition is possible (S3).

On the contrary, when the controller does not detect the diesel injection trigger signal, the controller determines a gasoline combustion mode (S1 and S2') and performs late intake valve closing (LIVC) to decrease the compression ratio than that in the mixture combustion mode (S3').

As such, the compression ratio is changed according to the combustion modes by the variable valve timing control, is increased to guarantee the diesel compression ignition in the mixture combustion mode, and is lowered to a value less than the minimum compression ratio where the diesel compression ignition is guaranteed in the gasoline combustion mode.

For example, it is possible to maintain the compression ration ranged from 13 to 14 in the mixture combustion mode and from 9 to 1 in the gasoline combustion mode by the variable valve timing control.

Needless to say, the controller controls timing and quantity of the gasoline injection by the first injector based on signals from respective sensors of a vehicle (gasoline injection control) in the mixture combustion mode and main injection and pilot injection timing by the second injector and a pressure and quantity of the injection (diesel compression ignition control) (S4 and S5).

In addition, in the gasoline combustion mode, the controller controls an injection timing and quantity of gasoline by the first injection based on the signals from the respective sensors of a vehicle (gasoline injection control) and number and times of spark release by ignition plugs (ignition control) (S4' and S5').

The steps S3 and S3' of controlling timings of the IVC by driving the variable valve timing device according to the combustion modes for the variable compression ratio will be described in more detail. The timing of the IVC, that is, an angle of the EIVC and the LIVC are determined as map values stored in the controller in advance such that a continuous variable control may be applied.

In this case, single angle determination map for the determination of an angle of the EIVC or the LIVC according to the driving state of an engine may be stored in the controller to enable the continuous variable control of the IVC, or two maps distinguished according to the combustion modes, that is, an EIVC angle determination map and a LIVC angle determination map are stored in the controller.

The maps are made by mapping the IVC (EIVC and LIVC angles) using experimental data according to driving conditions of an engine according to the driving state of an engine in advance, wherein the EIVC and LIVC angles corresponding to the current driving state of an engine are determined by the angle determination maps.

At this time, the EIVC angle determination map is used to control the variable valve timing in the mixture combustion mode while the LIVC angle determination map is used to control the variable valve timing in the gasoline combustion mode.

Moreover, information on the driving state for the determination of the map for the IVC may include an RPM and a load of an engine determined from the detected signals from the respective sensors of a vehicle, wherein the engine load may be replaced by information on a position of an acceleration pedal.

By doing so, the EIVC and the LIVC may be variable-controlled continuously according to the driving state of an engine and the continuous variable valve timing control may be performed by a known continuous variable valve timing device or a known valve timing device such as a valve timing device capable of performing continuous variable cam phasing.

Since a changed value is obtained from the maps according to the driving state of an engine when the combustion mode is changed and the driving state of an engine is changed even if the combustion mode is not changed, the IVC and the compression ratio of a fuel mixture may be variable-controlled even during performance of the same combustion mode.

Furthermore, in a case of changing the IVC according to the combustion mode, instead of the continuous variable control, a 2-step control in which the EIVC angle and the LIVC angle are switched into a first preset angle and a second preset angle according to the combustion modes may be applicable.

In FIG. 3, the IVC angle and the LIVC angle determination maps may be used in an engine to which the continuous variable valve timing device is applied. The 2-step control may be applied to perform the EIVC and the LIVC such that the valve timing is controlled at a specific angle according to the combustion modes, that is, the mixture combustion mode and the gasoline combustion mode.

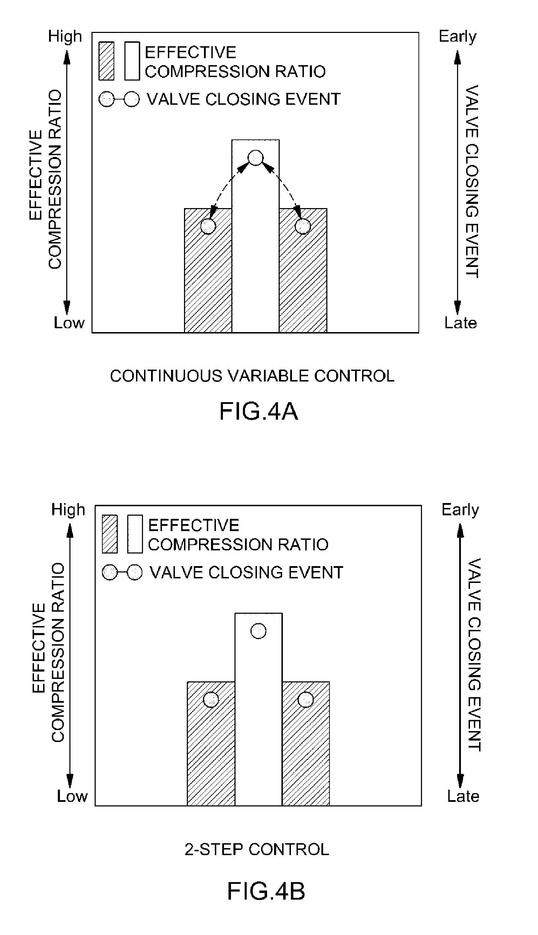

FIG. 4 is graphs illustrating a variable state of an intake valve closing period in a continuous variable control and a 2-step control according to the exemplary embodiment of the present invention and shows variable state of IVC performed by the continuous variable control and the 2-step control.

As illustrated in FIG. 4, the IVC is continuously controlled according to the combustion mode and the driving state of an engine in the continuous variable control, but is switched to a specific value by a variable valve timing device, to which a variable cam phaser is applied, according to the combustion mode in the 2-step control (early direction cam phasing/late direction cam phasing).

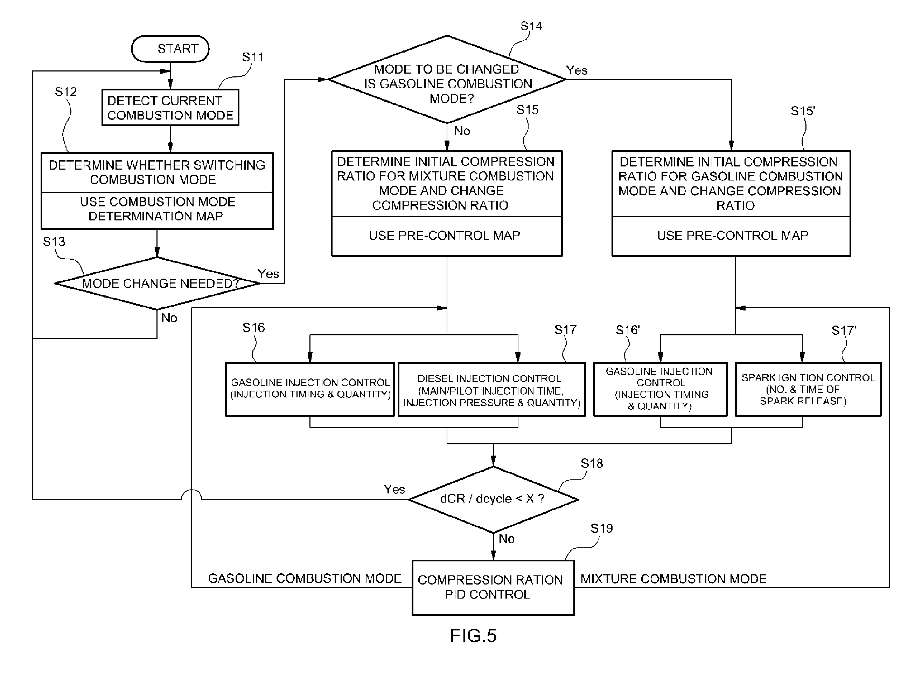

Meanwhile, FIG. 5 is a flowchart illustrating a combustion control method according to another embodiment of the present invention, wherein a compression ratio is directly changed to a value corresponding to a change combustion mode by a variable compression ratio (VCR) device when the combustion is changed according to the driving state of an engine.

In the exemplary embodiment as illustrated in FIG. 3, the IVC is controlled to change the compression ratio according to the combustion mode (2-step control) or the combustion mode and the driving state of an engine (continuous variable control) and the variable valve timing device is used as the variable compression ratio in an engine with which the variable valve timing device is provided. However, in the exemplary embodiment as illustrated in FIG. 5, a variable compression ratio device installed to an engine is used as a device to change the compression ratio.

There are devices to vary the compression ratio of cylinders such as a hydraulic variable compression ratio device and an electrical-driven variable compression ratio device, which are installed to an engine. The hydraulic variable compression ratio device using a hydraulic power controls a working hydraulic pressure based on a target hydraulic pressure (a target hydraulic pressure corresponding to a commanded value) such that a compression ratio reaches to a determined compression ratio when the compression ratio (the commanded value) is determined.

The exemplary embodiment as illustrated in FIG. 5 will be described in detail as follows. In the state when the controller detects or already knows a current combustion mode (S11), the controller determines whether to change the combustion mode based on the current driving state of an engine such as the RPM and the load (a position of an acceleration pedal) of the engine (S12).

In this case, for the determination of changing the combustion mode and of the combustion mode based on the current driving state of an engine, the combustion mode determination map as shown in FIG. 2, that is, a map set by distinguishing the combustion modes according to the RPM and the load of an engine may be used.

When the change of the combustion mode is needed and the needed combustion mode is determined from the map (S13, and S14), a compression ratio corresponding to the determined combustion mode is obtained such that the combustion is carried out under the changed compression ratio.

During this process, the controller determines a compression ratio corresponding to the combustion mode and outputs a control signal for the change of the compression ration into the determined compression ratio by utilizing a pre-control map stored in advance to control the variable compression ratio device (S15 and S15').

In this case, the pre-control map may be built by mapping a compression ratio according to the driving conditions of an engine such as the RPM and the load (or a position of an acceleration pedal) of an engine. Since the variable compression ratio device is controlled to change a compression ratio to the determined compression ratio when the combustion mode and the compression ratio corresponding to the current driving state are determined from the pre-control map, the combustion can be carried out at the compression ratio corresponding to the changed combustion mode and the driving state.

For example, when the gasoline combustion mode is changed to the mixture combustion mode, the compression ratio at the gasoline combustion mode and the driving state corresponding thereto is changed to one corresponding to the mixture combustion mode and the current driving state. On the contrary, when the mixture combustion mode is changed to the gasoline combustion mode, the compression ratio at the mixture combustion mode and the driving state corresponding thereto is changed to one corresponding to the gasoline combustion mode and the current driving state.

Moreover, from a time point when the combustion mode is changed to the mixture combustion mode, the controller controls an injection time and a quantity of gasoline by the first injector based on the signals from the respective sensors of a vehicle for the gasoline injection control and controls the main injection, a pilot time, a pressure, and a quantity of diesel injection by the second injector for the diesel injection control (S16 and S17).

On the contrary, if the combustion mode is changed to the gasoline combustion mode, the controller controls an injection time and a quantity of gasoline by the first injector based on the signals from the respective sensors of a vehicle for the gasoline injection control and controls the number and timing of spark release by ignition plugs for the spark ignition control (S16' and S17').

Preferably, when the injection ignition control and the compression ignition control of gasoline and diesel in the changed mixture combustion mode or the injection ignition control and the compression ignition control of gasoline and diesel in the changed gasoline combustion mode are started and the compression ratio is changed to the target compression ratio determined from the map by the variable compression ratio device at the moment of changing the combustion modes, and when compression ratio rate (dCR/cycle) indicating a compression ratio (CR) per a cycle (compression ratio of a map) is greater than a preset value X, PID control of the variable compression ratio device is carried out (S18 and S19).

That is, the variable compression ratio device is controlled with a commanded value by the PID control to obtain the target compression ratio rapidly, precisely, and stably. For example, when a hydraulic pressure corresponding to the target compression ratio determined by a map for the change of the compression ratio is determined in an engine to which the hydraulic variable compression ratio device is applied, a compression ratio PID control is carried out such that a working hydraulic pressure of the variable compression ratio device follows the target hydraulic pressure as a reference value with feedback of a hydraulic pressure measurement from a hydraulic pressure sensor.

The process of determining the combustion mode according to the current driving state of an engine using the combustion mode determination map in the exemplary embodiment as shown in FIG. 5, that is, the process of determining whether the combustion mode should be changed from the combustion mode determination map based on the detected current driving state of an engine and determining a necessary combustion mode may be replaced with the process of determining a combustion mode according to whether there is a diesel injection trigger signal is detected as illustrated in FIG. 3.

Even in the exemplary embodiment as shown in FIG. 3, the process of determining the combustion mode according to whether the diesel injection trigger signal is detected may be replaced with the process of determining a combustion mode using the combustion mode determining map.

In addition, if the driving state of an engine is changed although the combustion mode is changed as illustrated in FIG. 5 and the combustion mode is not changed, the compression ratio of cylinders may be variable-controlled continuously by the variable compression ratio device even during the performance of the same combustion mode because the changed compression ratio is obtained from the driving state of an engine.

By doing so, the present invention selects the combustion mode according to the driving state of an engine and changes the compression ratio to a compression ratio corresponding to the selected combustion mode so that problems such as knocking and abnormal compression ignition which may occur in an engine with the diesel-gasoline mixture combustion mode and the gasoline combustion mode can be solved.

For convenience in explanation and accurate definition in the appended claims, the terms "upper", "lower", "inner" and "outer" are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A method of controlling combustion of an engine having a mixture combustion mode where a mixture combustion of diesel and gasoline is carried out and a gasoline combustion mode where only gasoline is burnt, the method comprising:
determining a combustion mode according to a current driving state of the engine from the mixture combustion mode and the gasoline combustion mode; and
variable-controlling the compression ratio to a compression ratio corresponding to a corresponding combustion mode by controlling a variable compression ratio device for a control of the compression ratio to the compression ratio corresponding to the combustion mode according to the current driving state of the engine.

2. The method of claim 1, wherein the determining of the combustion mode comprises detecting a diesel injection trigger signal, wherein the mixture combustion mode is determined when the diesel injection trigger signal is detected, and the gasoline combustion mode is determined when the diesel injection trigger signal is not detected.

3. The method of claim 1 or 2, wherein the determining of the combustion mode comprises:
detecting the current driving state of the engine; and
determining the combustion mode corresponding to the current driving state of the engine using a combustion mode termination map in which combustion modes are distinguished according to driving states of the engine.

4. The method of one of claims 1-3, wherein the current driving state of the engine comprises an RPM (Revolutions Per Minute) and a load of the engine.

5. The method of one of claims 1-4, wherein the variable compression ratio device comprises a variable valve timing device and the variable valve timing device is controlled for a variable compression ratio to control an intake valve closing according to the combustion mode, wherein, optionally, the intake valve closing is delayed such that a compression ratio of a fuel mixture in the gasoline combustion mode is lower than that of the mixture combustion mode when the mixture combustion mode is changed to the gasoline combustion mode by determining the current driving state of the engine, and/or wherein, optionally, an early intake valve closing is controlled such that a compression ratio of a fuel mixture in the mixture combustion mode is higher than that of the gasoline combustion mode when the gasoline combustion mode is changed to the mixture combustion mode by determining the current driving state of the engine, and/or wherein, optionally, the intake valve closing is determined by preset values according to the mixture combustion mode and the gasoline combustion mode to be switched to each other according to the combustion mode, and/or wherein, optionally, the intake valve closing is determined by a value according to the current driving state of the engine from a map in a corresponding combustion mode to be continuously variable-controlled, and the map is made by which the intake valve closing is mapped with another value according to the driving state of the engine, and/or wherein, optionally, the driving state of the engine that determines the intake valve closing comprises an RPM and a load of the engine.

6. The method of one of claims 1-5, wherein the variable compression ratio device comprises a variable compression ratio device installed in the engine to vary a compression ratio of cylinders of the engine directly, wherein, optionally, the variable compression ratio device is controlled such that the compression ratio in the gasoline combustion mode is lower than that of the mixture combustion mode when the mixture combustion mode is changed to the gasoline combustion mode by determining the combustion mode according to the current driving state of the engine, and/or wherein, optionally, the variable compression ratio device is controlled such that the compression ratio in the mixture combustion mode is greater than that of the gasoline combustion mode when the gasoline combustion mode is changed to the mixture combustion mode by determining the combustion mode according to the current driving state of the engine, and/or wherein, optionally, the compression ratio corresponding to a combustion mode is determined to control by a map from an engine driving state information comprising the RPM and the load of the engine, and/or wherein, optionally, when a rate of a compression ratio indicating a rate of a compression ratio per a cycle which is obtained from a compression ratio of the map is greater than a reference value, a PID (Proportional-Integral-Derivative) control of the variable compression ratio device is carried out.

7. The method of one of claims 1-6, wherein the mixture combustion mode is a combustion mode where the gasoline is injected into an intake port to produce a premixture in which air and the gasoline are mixed with each other during an intake stroke and where diesel for compression ignition is injected into the premixture within a combustion chamber for the compression ignition during a compression stroke.

8. The method of one of claims 1-7, wherein the gasoline combustion mode is a spark ignition combustion mode where the gasoline is injected into an intake port to produce a premixture in which air and the gasoline are mixed with each other during an intake stroke and where the premixture is ignited by an ignition plug during an explosive stroke.

9. An apparatus for controlling combustion of an engine having a mixture combustion mode where diesel and gasoline are mixed and burnt and a gasoline combustion mode where the gasoline only is burnt, the apparatus comprising:
a controller determining a combustion mode from the mixture combustion mode and the gasoline combustion mode according to a current driving state of the engine and outputting a control signal for a control of a compression ratio corresponding to a combustion mode according to the current driving state of the engine; and
a variable compression ratio device changing the compression ratio to a value corresponding to a corresponding combustion mode in response to the control signal from the controller.

10. The apparatus of claim 9, wherein the current driving state of the engine comprises an RPM (Revolutions Per Minute) and a load of the engine which are determined by a detection signal from a driving state detector.

11. The apparatus of claim 9 or 10, wherein the variable compression ratio device comprises a variable valve timing device, and the controller outputs the control signal to control the variable valve timing device for a variable compression ratio such that an intake valve closing is controlled according to the combustion mode, wherein, optionally, the controller delays the intake valve closing such that a compression ratio of a fuel mixture in the gasoline combustion mode is lower than that of the mixture combustion mode when the mixture combustion mode is changed to the gasoline combustion mode by determining the current driving state of the engine, and/or wherein, optionally, the controller controls an intake valve closing early such that a compression ratio of a fuel mixture in the mixture combustion mode is higher than that of the gasoline combustion mode when the gasoline combustion mode is changed to the mixture combustion mode by determining the current driving state of the engine.

12. The apparatus of one of claims 9-11, wherein the variable compression ratio device comprises a variable compression ratio device which is installed in the engine to vary the compression ratio of cylinders of the engine directly according to the control signal from the controller, wherein, optionally, the controller controls the variable compression ratio device such that the compression ratio in the gasoline combustion mode is lower than that of the mixture combustion mode when the mixture combustion mode is changed to the gasoline combustion mode by determining the combustion mode according to the current driving state of the engine.

13. The apparatus of one of claims 9-12, wherein the controller controls the variable compression ratio device such that the compression ratio in the mixture combustion mode is greater than that of the gasoline combustion mode when the gasoline combustion mode is changed to the mixture combustion mode by determining the combustion mode according to the current driving state of the engine.

14. The apparatus of one of claims 9-13, wherein the mixture combustion mode is a combustion mode where the gasoline is injected into an intake port to produce a premixture in which air and the gasoline are mixed with each other during an intake stroke and where diesel for compression ignition is injected into the premixture within a combustion chamber for the compression ignition during a compression stroke.

15. The apparatus of one of claims 9-14, wherein the gasoline combustion mode is a spark ignition combustion mode where the gasoline is injected into an intake port to produce a premixture in which air and the gasoline are mixed with each other during an intake stroke and where the premixture is ignited by an ignition plug during an explosive stroke.
